# EUROPEAN PATENT APPLICATION

(11) **EP 4 797 419 A1**
(43) Date of publication of application: **26.08.2026**
(21) Application number: 25867272.4
(22) Date of filing: 18.12.2025
(51) Int. Cl.: H01M 50/503, H01M 4/70

(54) **CURRENT COLLECTOR DISC, BATTERY AND ELECTRIC DEVICE**

(30) Priority: 31.12.2024 CN 202423322745 U; 31.12.2024 CN 202411999442
(71) Applicant: HUIZHOU EVE POWER CO., LTD., Huizhou, Guangdong 516039 (CN); Eve Power Co., Ltd., Jingmen, Hubei 448000 (CN)
(72) Inventor: LIU, Rongwei, Huizhou, Guangdong 516039 (CN); LI, Renbing, Huizhou, Guangdong 516039 (CN); YAN, Bo, Huizhou, Guangdong 516039 (CN); XU, Yuebin, Huizhou, Guangdong 516039 (CN)
(74) Representative: Zhu, Puxing
(86) International application number: PCT/CN2025/143657
(87) International publication number: WO 2026/145045

(57) **Abstract**

The present application provides a current collecting plate, a battery cell, and an electrical device. The current collecting plate includes a current collecting plate body and a foldable member, the current collecting plate body is defined with a through hole, the foldable member is provided at the through hole, the foldable member includes a current collecting portion and a connecting portion, and the connecting portion connects the current collecting portion with the current collecting plate body. A thickness of a part of the connecting portion is less than a thickness of other parts of the connecting portion, and/or a thickness of at least part of the connecting portion is less than a thickness of the current collecting plate body, and/or a thickness of at least part of the connecting portion is less than a thickness of the current collecting portion.

## Description

This application claims priority to Chinese Patent Application No. 202411999442.1, filed on December 31, 2024, and
claims priority to Chinese Patent Application No. 202423322745.8, filed on December 31, 2024;
The entire contents of the above applications are incorporated herein by reference.

### TECHNICAL FIELD

The present application relates to the field of battery cell technologies, and in particular, to a current collecting plate, a battery cell, and an electrical device.

### BACKGROUND

Battery cells are widely used in energy storage systems, vehicles, consumer electronics, and other fields. Thermal runaway of the battery cell means that in during working process of the battery cell, a chemical reaction caused by an increase of an internal temperature accelerates, resulting in a further increase of the temperature, thereby forming a self-enhanced feedback cycle, and finally causing overheating, smoke, combustion, or even explosion of the battery cell.

### SUMMARY

To avoid aggravation of thermal runaway of the battery cell, when thermal runaway occurs in the battery cell, a current collecting plate needs to be unfolded to release pressure of the battery cell. In the related arts, the unfolding effect of the current collecting plate needs to be improved.

In a first aspect, the present application provides a current collecting plate, including:
a current collecting plate body defined with a through hole; and
a foldable member disposed at the through hole, the foldable member including a current collecting portion and a connecting portion, the connecting portion connecting the current collecting portion with the current collecting plate body.

A thickness of a part of the connecting portion is less than a thickness of other parts of the connecting portion, and/or a thickness of at least part of the connecting portion is less than a thickness of the current collecting plate body, and/or a thickness of at least part of the connecting portion is less than a thickness of the current collecting portion.

In a second aspect, the present application provides a battery cell, including a shell, a roll core, and a current collecting plate, the shell is formed with a mounting cavity, both the roll core and the current collecting plate are disposed in the mounting cavity, and the current collecting plate is connected to the roll core.

In a third aspect, the present application provides an electrical device, including the battery cell.

### BENEFICIAL EFFECTS

According to the current collecting plate provided by the present application, the thickness of a part of the connecting portion is set to be less than the thickness of other parts of the connecting portion, that is, the thickness of a part of the connecting portion is thinned, and the thinned part of the connecting portion is easier to bend, so that the foldable member is easier to fold, a folding angle of the foldable member is ensured, and the unfolding effect of the current collecting plate is improved.

By setting the thickness of at least part of the connecting portion to be less than the thickness of the current collecting plate body, that is, thinning the thickness of at least part of the connecting portion, the connecting portion after thinning is easier to bend, which reduces the difficulty of folding the current collecting portion relative to the connecting portion, thereby making the foldable member easier to fold, ensuring the folding angle of the foldable member, and improving the unfolding effect of the current collecting plate.

By setting the thickness of at least part of the connecting portion to be less than the thickness of the current collecting portion, that is, thinning the thickness of at least part of the connecting portion, the connecting portion after thinning is easier to bend, which reduces the difficulty of folding the current collecting portion relative to the connecting portion, thereby making the foldable member easier to fold, ensuring the folding angle of the foldable member, and improving the unfolding effect of the current collecting plate.

### BRIEF DESCRIPTION OF DRAWINGS

FIG. 1 is a first schematic structural diagram of a current collecting plate provided in embodiments of the present application;
FIG. 2 is a second schematic structural diagram of a current collecting plate provided in embodiments of the present application;
FIG. 3 is a cross-sectional view of a current collecting plate provided in embodiments of the present application;
FIG. 4 is a schematic structural diagram of a connecting portion provided in embodiments of the present application;
FIG. 5 is a first schematic structural diagram of a connecting member provided in embodiments of the present application;
FIG. 6 is a second schematic structural diagram of a connecting member provided in embodiments of the present application;
FIG. 7 is a schematic structural diagram of a current collecting plate provided in embodiments of the present application, where a central portion is convex and a connecting member is not interrupted;
FIG. 8 is a schematic structural diagram of a current collecting plate provided in embodiments of the present application, where a connecting member is interrupted;
FIG. 9 is a schematic structural diagram of a current collecting plate provided in embodiments of the present application, where a connecting member is interrupted and the foldable member is unfolded.

### EMBODIMENTS OF THE INVENTION

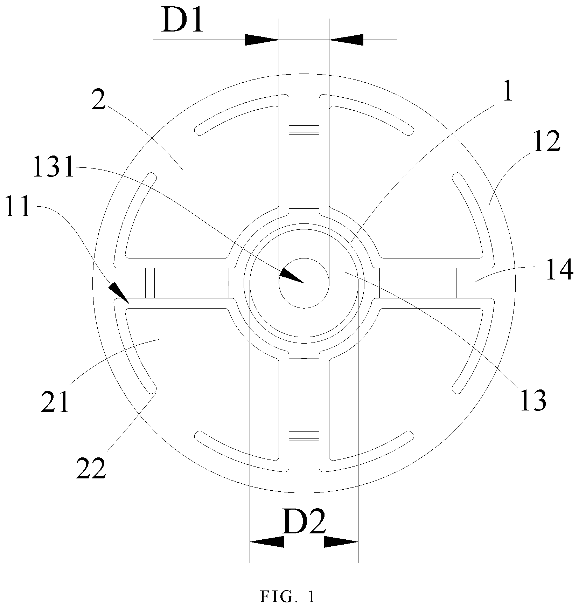

Embodiments of the present application disclose a current collecting plate. Referring to FIG. 1, FIG. 2, and FIG. 3, the current collecting plate includes a current collecting plate body 1 and a foldable member 2, the current collecting plate body 1 is defined with a through hole 11, the foldable member 2 is disposed at the through hole 11, the foldable member 2 includes a current collecting portion 21 and a connecting portion 22, and the connecting portion 22 connects the current collecting portion 21 with the current collecting plate body 1.

A thickness of a part of the connecting portion 22 is less than a thickness of other parts of the connecting portion 22, and/or a thickness of at least part of the connecting portion 22 is less than a thickness of the current collecting plate body 1, and/or a thickness of at least part of the connecting portion 22 is less than a thickness of the current collecting portion 21.

According to the current collecting plate in the embodiments of the present application, by setting the thickness of a part of the connecting portion 22 to be less than the thickness of other parts of the connecting portion 22, that is, reducing the thickness of a part of the connecting portion 22, the part of the connecting portion 22 after reducing the thickness is easier to bend, so that the foldable member 2 is easier to fold, a folding angle of the foldable member 2 is ensured, and the unfolding effect of the current collecting plate is improved.

By setting the thickness of at least part of the connecting portion 22 to be less than the thickness of the current collecting plate body 1, that is, thinning the thickness of at least part of the connecting portion 22, the connecting portion 22 after thinning is easier to bend, which reduces the difficulty of folding the current collecting portion 21 relative to the connecting portion 22, thereby making the foldable member 2 easier to fold, ensuring the folding angle of the foldable member 2, and improving the unfolding effect of the current collecting plate.

By setting the thickness of at least part of the connecting portion 22 to be less than the thickness of the current collecting portion 21, that is, thinning the thickness of at least part of the connecting portion 22, the connecting portion 22 after thinning is easier to bend, which reduces the difficulty of folding the current collecting portion 21 relative to the connecting portion 22, thereby making the foldable member 2 easier to fold, ensuring the folding angle of the foldable member 2, and improving the unfolding effect of the current collecting plate.

It can be understood that the unfolding effect of the current collecting plate refers to the folding degree/folding angle of the foldable member 2, and the greater the folding degree/folding angle of the foldable member 2, the better the unfolding effect of the current collecting plate.

The unfolding effect of the current collecting plate refers to an exhaust effect of the current collecting plate, and may also be understood as an exhaust area of the current collecting plate. When the folding angle of the foldable member 2 is larger, the obstruction of the foldable member to the gas passing through the current collecting plate is smaller, the exhaust area of the current collecting plate is larger, and the exhaust effect is better.

It can be understood that the current collecting plate is connected to the roll core of the battery cell, when thermal runaway occurs in the battery cell, high-temperature gas may flow to the current collecting plate, and the high-temperature gas acts on the foldable member 2 through the through hole 11, so that the foldable member 2 is folded to realize the unfolding of the current collecting plate, so that the high-temperature gas can be discharged through the current collecting plate to realize the pressure relief of the battery cell, thereby ensuring the safety of the battery cell.

It can be understood that by thinning the thickness of the connecting portion 22, when the battery cell is subjected to overcharging or overcurrent conditions, the temperature rises, and the thinned connecting portion 22 may be fused, so that the junction of the current collecting portion 21 and the current collecting plate body 1 is interrupted, thereby realizing power-off protection and improving the safety of the battery cell.

When thermal runaway occurs in the battery cell, the thinned connecting portion 22 is also fused. Under a condition that only a part of the connecting portion 22 is thinned, after the thinned connecting portion 22 is fused, the folding difficulty of the current collecting portion 21 is reduced, which is beneficial to the folding of the foldable member 2; under a condition that the entire of the connecting portion 22 is thinned, the connecting portion 22 may be directly fused, and the current collecting portion 21 may be directly separated from the current collecting plate body 1 under the action of the gas generated by thermal runaway, which improves the unfolding effect of the foldable member 2.

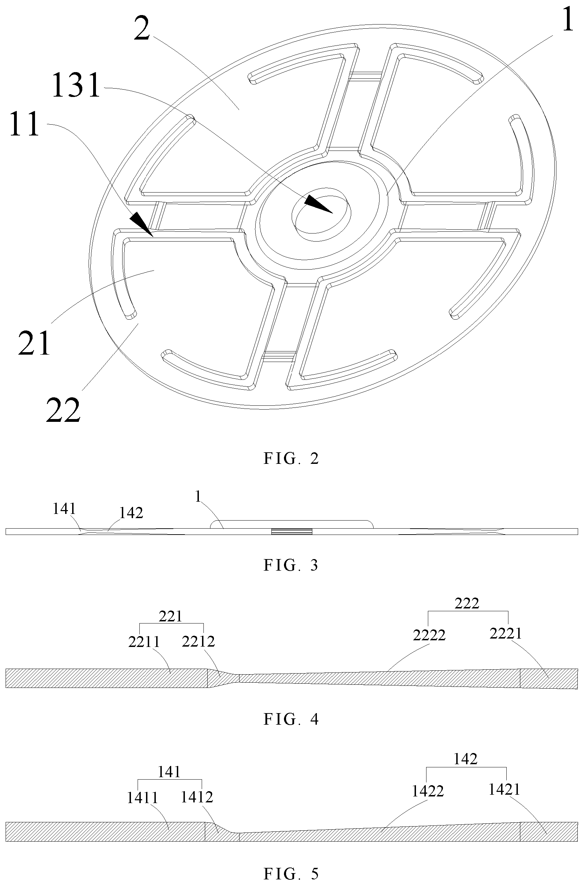

In some embodiments, referring to FIG. 1 and FIG. 4, the connecting portion 22 includes a first metal connecting portion 221 and a second metal connecting portion 222, the first metal connecting portion 221 connects the second metal connecting portion 222 with the current collecting plate body 1, the second metal connecting portion 222 is connected to the current collecting portion 21, and a junction of the first metal connecting portion 221 and the second metal connecting portion 222 is located at a position of the connecting portion 22 with a minimum thickness.

It can be understood that the thickness of the junction of the first metal connecting portion 221 and the second metal connecting portion 222 is reduced, which reduces the difficulty of folding the second metal connecting portion 222 connected to the current collecting portion 21 relative to the first metal connecting portion 221, so that the foldable member 2 is easier to fold, ensures the folding angle of the foldable member 2, and improves the unfolding effect of the current collecting plate.

It can be understood that the thickness of the junction of the first metal connecting portion 221 and the second metal connecting portion 222 is set to be the minimum thickness of the connecting portion 22, which effectively reduces the difficulty of folding the second metal portion relative to the first metal portion, so that the current collecting portion 21 is easier to fold. At the same time, it is ensured that the junction of the first metal connecting portion 221 and the second metal connecting portion 222 can be fused when overcharging or overcurrent occurs.

In some embodiments, referring to FIG. 1 and FIG. 4, the first metal connecting portion 221 includes a first secondary connecting portion 2211 and a second secondary connecting portion 2212, the first secondary connecting portion 2211 connects the second secondary connecting portion 2212 with the current collecting plate body 1, and the second secondary connecting portion 2212 is connected to the second metal connecting portion 222.

The thickness of the second secondary connecting portion 2212 gradually decreases along a direction from the first secondary connecting portion 2211 to the second secondary connecting portion 2212.

It can be understood that the thickness of the second secondary connecting portion 2212 is set to gradually decrease, and then the thickness of the connecting portion 22 gradually decreases from the second secondary connecting portion 2212 to the junction of the second secondary connecting portion 2212 and the second metal connecting portion 222, which facilitates the formation of the first metal connecting portion 221 and the connecting portion 22.

In some embodiments, referring to FIG. 1 and FIG. 4, the second metal connecting portion 222 includes a third secondary connecting portion 2221 and a fourth secondary connecting portion 2222, the third secondary connecting portion 2221 connects the fourth secondary connecting portion 2222 with the current collecting portion 21, and the fourth secondary connecting portion 2222 is connected to the first metal connecting portion 221.

The thickness of the fourth secondary connecting portion 2222 gradually decreases along a direction from the third secondary connecting portion 2221 to the fourth secondary connecting portion 2222.

It can be understood that the thickness of the fourth secondary connecting portion 2222 is set to gradually decrease, and then the thickness of the connecting portion 22 gradually decreases from the fourth secondary connecting portion 2222 to the junction of the fourth secondary connecting portion 2222 and the first metal connecting portion 221, which facilitates the formation of the second metal connecting portion 222 and the connecting portion 22.

In some embodiments, there are a plurality of through holes 11 and a plurality of foldable members 2, and the plurality of through holes 11 are in one-to-one correspondence with the plurality of foldable members 2.

It can be understood that when thermal runaway occurs in the battery cell, each foldable member 2 may be folded, ensuring the unfolding effect of the current collecting plate.

In some embodiments, referring to FIG. 1 and FIG. 2, the current collecting plate body 1 includes an edge portion 12, a central portion 13, and a connecting member 14, the connecting member 14 connects the edge portion 12 with the central portion 13, and the plurality of foldable members 2 are disposed around the central portion 13.

In some examples, the plurality of foldable members 2 are all connected to the edge portion 12.

It may be understood that when thermal runaway occurs in the battery cell, the foldable member 2 may be folded relative to the edge portion 12, to unfold the current collecting plate.

In some examples, the plurality of foldable members 2 are all connected to the central portion 13.

It may be understood that when thermal runaway occurs in the battery cell, the foldable member 2 may be folded relative to the central portion 13, to unfold the current collecting plate.

In some examples, different foldable members 2 are connected to different connecting members 14.

It may be understood that when thermal runaway occurs in the battery cell, the foldable member 2 may be folded relative to the connecting member 14, to unfold the current collecting plate. Meanwhile, because different foldable members 2 are connected to different connecting members 14, mutual interference between the different foldable members 2 can be reduced, to ensure that the different foldable members 2 can be folded or unfolded.

In some embodiments, referring to FIG. 5, FIG. 6, and FIG. 7, the thickness of a part of the connecting member 14 is less than a thickness of other parts of the connecting member 14.

It can be understood that the thickness of a part of the connecting member 14 is set to be less than the thickness of other parts of the connecting member 14, that is, the thickness of a part of the connecting member 14 is reduced.

When thermal runaway occurs in the battery cell, the gas generated during thermal runaway acts on the central portion, so that the central portion moves in a direction away from the edge portion 12, and the central portion pulls the connecting member 14. Because the junction of the part of the connecting member 14 after thinning the thickness and the part of the connecting member 14 without thinning has a tendency to deform, and then the central portion may bulge under the action of the gas. That is, in an early stage of thermal runaway of the battery cell, the central portion may first pull up the distance from the roll core of the battery cell, and at this time, the connecting member 14 may deform, so that the central portion can smoothly bulge, that is, at this time, the connecting member 14 may not be directly interrupted, so that the current collecting plate and the roll core can still be electrically connected in the early stage of thermal runaway, thereby avoiding the damage to the structure of the roll core caused by the direct separation of the current collecting plate and the roll core in the early stage of thermal runaway, and avoiding the thermal runaway aggravated by the short circuit of the positive and negative electrodes of the roll core.

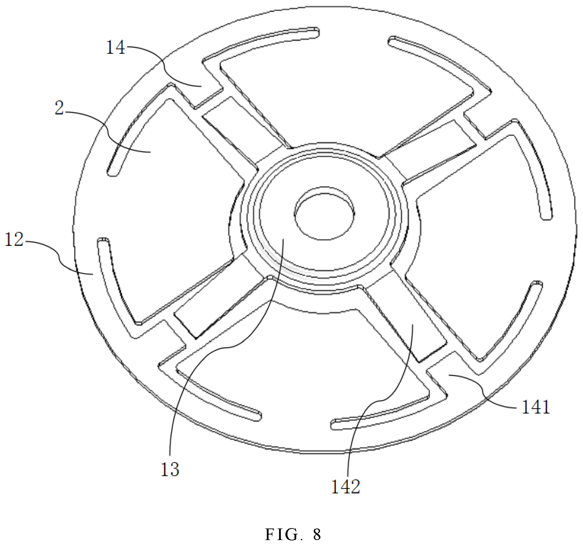

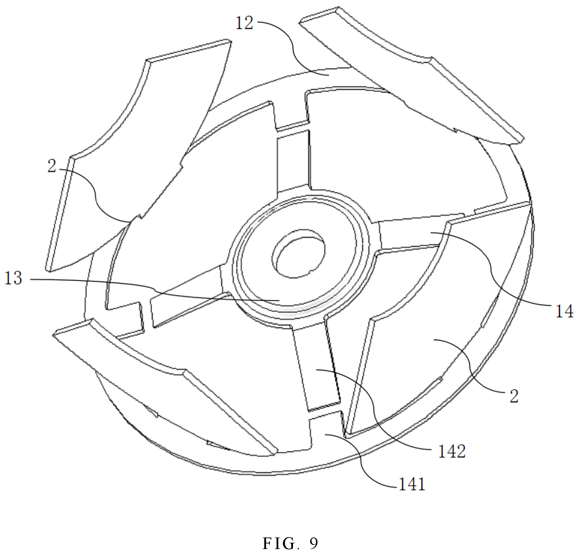

With the development of thermal runaway, referring to FIG. 8 and FIG. 9, the part of the connecting member 14 with a reduced thickness may be interrupted, so that the central portion can be separated to realize the unfolding of the current collecting plate.

When the temperature of the battery cell is too high due to overcharge of the battery cell or overcurrent of the battery cell, a part of the connecting members 14 with a reduced thickness may be fused to achieve power-off protection and improve the safety of the battery cell.

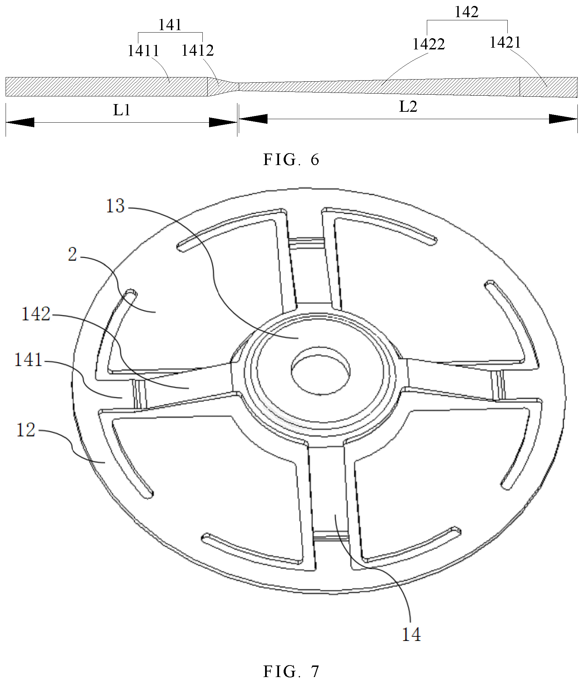

In some embodiments, referring to FIG. 5 and FIG. 6, the connecting member 14 includes a first metal connecting segment 141 and a second metal connecting segment 142, the first metal connecting segment 141 connects the second metal connecting segment 142 with the edge portion 12, the second metal connecting segment 142 is connected to the central portion 13, and a junction of the first metal connecting segment 141 and the second metal connecting segment 142 is located at a position of the connecting member 14 with a minimum thickness.

It can be understood that the thickness of the junction of the first metal connecting segment 141 and the second metal connecting segment 142 is reduced, which reduces the difficulty of the deformation of the second metal connecting portion 222 relative to the first metal connecting portion 221, thereby reducing the difficulty of the protrusion of the central portion 13 in the direction away from the roll core of the battery cell, so that the central portion 13 can be pulled apart from the roll core of the battery cell in the early stage of thermal runaway, and the connecting member 14 is not directly interrupted, so that the current collecting plate and the roll core are still electrically connected in the early stage of thermal runaway, thereby avoiding the damage to the structure of the roll core caused by the direct separation of the current collecting plate and the roll core in the early stage of thermal runaway, avoiding the short circuit of the positive and negative electrodes of the roll core and aggravating thermal runaway, the foldable member 2 is more prone to folding, ensuring the folding angle of the foldable member 2, and improving the unfolding effect of the current collecting plate.

It can be understood that the thickness of the junction of the first metal connecting segment 141 and the second metal connecting segment 142 is set as the minimum thickness of the connecting member 14, which effectively reduces the difficulty of deformation of the second metal portion relative to the first metal portion, so that the central portion 13 is easier to protrude away from the roll core. At the same time, it is ensured that the junction of the first metal connecting portion 221 and the second metal connecting portion 222 can be fused when overcharging or overcurrent occurs.

In some embodiments, referring to FIG. 5 and FIG. 6, the first metal connecting segment 141 includes a first secondary connecting segment 1411 and a second secondary connecting segment 1412, the first secondary connecting segment 1411 connects the second secondary connecting segment 1412 with the edge portion 12, and the second secondary connecting segment 1412 is connected to the second metal connecting segment 142.

The thickness of the second secondary connecting segment 1412 gradually decreases along the direction from the first secondary connecting segment 1411 to the second secondary connecting segment 1412.

It can be understood that the thickness of the second secondary connecting segment 1412 is set to gradually decrease, and then the thickness of the connecting member 14 gradually decreases from the second secondary connecting segment 1412 to the junction of the second secondary connecting segment 1412 and the second metal connecting segment 142, which facilitates the formation of the first metal connecting segment 141 and the connecting member 14.

In some embodiments, referring to FIG. 5 and FIG. 6, the second metal connecting segment 142 includes a third secondary connecting segment 1421 and a fourth secondary connecting segment 1422, the third secondary connecting segment 1421 connects the fourth secondary connecting segment 1422 with the central portion 13, and the fourth secondary connecting segment 1422 is connected to the first metal connecting segment 141.

The thickness of the fourth secondary connecting segment 1422 gradually decreases along the direction from the third secondary connecting segment 1421 to the fourth secondary connecting segment 1422.

It can be understood that the thickness of the fourth secondary connecting segment 1422 is set to gradually decrease, and then the thickness of the connecting member 14 gradually decreases from the fourth secondary connecting segment 1422 to the junction of the fourth secondary connecting segment 1422 and the first metal connecting segment 141, which facilitates the formation of the second metal connecting segment 142 and the connecting member 14.

In some embodiments, there are a plurality of connecting members 14, and the plurality of connecting members 14 are uniformly arranged around the central portion 13.

It can be understood that the plurality of connecting members 14 are uniformly arranged around the central portion 13, so that the force applied to the central portion 13 by the connecting members 14 is uniform, or the force applied to each connecting member 14 by the central portion 13 may be the same. Furthermore, in the early stage of thermal runaway of the battery cell, the gas generated by thermal runaway acts on the central portion 13, and the central portion 13 transfers the force to each connecting member 14, so that the deformation amplitude at the thinned portion of each connecting member 14 is the same, thereby ensuring the uniformity of the protrusion of the central portion 13, that is, ensuring that the central portion 13 can be pulled up uniformly.

In some embodiments, referring to FIG. 5 and FIG. 6, a distance between an end portion at an end of the first metal connecting segment 141 away from the junction and the junction is defined as L1, and a distance between an end portion at an end of the second metal connecting segment 142 away from the junction and the junction is defined as L2.

In some examples, L1 is less than L2, so that the length of the connecting member 14 between the central portion 13 and the junction is greater than the length of the remaining part of the connecting member 14, thereby ensuring the protrusion height of the central portion 13 in the early stage of thermal runaway of the battery cell.

It can be understood that if the length of the connecting member 14 between the central portion 13 and the junction is too short, in the early stage of thermal runaway of the battery cell, the height of the protrusion of the central portion 13 is limited, and it is difficult for the central portion 13 to effectively pull away from the roll core of the battery cell.

In some examples, a ratio of L1 to L2 ranges from 0.2 to 1.

It can be understood that if the ratio of L1 to L2 is less than 0.2, the length of the connecting member 14 between the central portion 13 and the junction is too long, and the height of the protrusion of the central portion 13 is too high, and in the early stage of thermal runaway, the connecting member 14 may be broken at the central portion 13; if the ratio of L1 to L2 is greater than 1, the length of the connecting member 14 between the central portion 13 and the junction is too short, and the height of the protrusion of the central portion 13 is limited, so that the central portion 13 is difficult to effectively pull away from the roll core of the battery cell. Therefore, in the present application, the ratio of L1 to L2 is set to range from 0.2 to 1.

In some embodiments, the maximum thickness of the connecting member 14 ranges from 0.1 mm to 3 mm, that is, the thickness of the connecting member 14 without thinning ranges from 0.1 mm to 3 mm.

It can be understood that if the maximum thickness of the connecting member 14 is less than 0.1 mm, the strength of the connecting member 14 is insufficient; if the maximum thickness of the connecting member 14 is greater than 3 mm, the connecting member 14 may greatly affect the size of the current collecting plate. Therefore, in the present application, the maximum thickness of the connecting member 14 is set to range from 0.1 mm to 3 mm.

In some embodiments, a ratio of the thickness of the junction to the maximum thickness of the connecting member 14 is less than or equal to 0.7.

It can be understood that the thickness of the junction is reduced to a degree less than or equal to 0.7 times the original thickness, thereby ensuring the thickness reduction effect of the junction.

In some embodiments, the central portion 13 protrudes from the foldable member 2.

It can be understood that after the current collecting plate is mounted on the battery cell, since the central portion 13 protrudes from the foldable portion, a gas chamber space can be formed between the current collecting plate and a wall surface of the battery cell, and the gas chamber space can accommodate the gas generated during normal operation of the battery cell, thereby avoiding excessive gas pressure inside the battery cell due to the gas generated during normal operation.

In some embodiments, a first end of the second metal connecting segment 142 is connected to the first metal connecting segment 141, a second end of the second metal connecting segment 142 is connected to the central portion 13, and the second end of the second metal connecting segment 142 protrudes in a direction away from the first metal connecting segment 141 relative to the first end of the second metal connecting segment 142.

It can be understood that when the central portion 13 is subjected to a gas action, the central portion 13 may protrude in a direction away from the roll core of the battery cell, the second end of the second metal connecting segment 142 is connected to the central portion, and the second end of the second metal connecting segment 142 may protrude in a direction away from the first metal connecting segment 141 under the pulling of the central portion 13.

It may be understood that, when the battery cell is formed, the second end of the second metal connecting segment 142 may be set to protrude in a direction away from the first metal connecting segment 141, so that the central portion 13 protrudes in the direction away from the first metal connecting segment 141, a distance between the central portion 13 and the roll core of the battery cell is increased, and a space for accommodating the gas generated by the normal operation of the battery cell is formed between the central portion 13 and the roll core of the battery cell, thereby avoiding deformation or displacement of the central portion 13 caused by the gas generated by the normal operation of the battery cell.

Embodiments of the present application also provide a battery cell. The battery cell includes a shell, a roll core, and a current collecting plate, the shell is formed with a mounting cavity, the roll core and the current collecting plate are both disposed in the mounting cavity, and the current collecting plate is connected to the roll core.

According to the battery cell in the embodiments of the present application, by setting the thickness of a part of the connecting portion 22 to be less than the thickness of other parts of the connecting portion 22, that is, reducing the thickness of the part of the connecting portion 22, the part of the connecting portion 22 after the thickness reduction is easier to bend, so that the foldable member 2 is easier to fold, the folding angle of the foldable member 2 is ensured, the unfolding effect of the current collecting plate is improved, and the internal pressure and gas of the battery cell can be effectively released when thermal runaway occurs.

By setting the thickness of at least part of the connecting portion 22 to be less than the thickness of the current collecting plate body 1, that is, thinning the thickness of at least part of the connecting portion 22, the connecting portion 22 after thinning is easier to bend, which reduces the difficulty of folding the current collecting portion 21 relative to the connecting portion 22, thereby making the foldable member 2 easier to fold, ensuring the folding angle of the foldable member 2, improving the unfolding effect of the current collecting plate, and enabling the internal pressure and gas to be effectively released when thermal runaway occurs in the battery cell.

By setting the thickness of at least part of the connecting portion 22 to be less than the thickness of the current collecting portion 21, that is, thinning the thickness of at least part of the connecting portion 22, the connecting portion 22 after thinning is easier to bend, which reduces the difficulty of folding the current collecting portion 21 relative to the connecting portion 22, thereby making the foldable member 2 easier to fold, ensuring the folding angle of the foldable member 2, improving the unfolding effect of the current collecting plate, and enabling the internal pressure and gas to be effectively released when thermal runaway occurs in the battery cell.

In some embodiments, referring to FIG. 1 and FIG. 2, the current collecting plate body 1 includes an edge portion 12, a central portion 13, and a connecting member 14, the connecting member 14 connects the edge portion 12 with the central portion 13, and the central portion 13 is formed with a liquid injection hole 131.

It can be understood that by forming the liquid injection hole 131 on the central portion 13, the liquid can be injected into the roll core through the liquid injection hole 131, which is simple and convenient.

In some examples, a ratio of an area of the liquid injection hole 131 to a cross-sectional area of the roll core is less than 0.2, so as to prevent the area of the liquid injection hole 131 from being too large to affect the structural strength of the current collecting plate.

In some embodiments, referring to FIG. 1 and FIG. 2, a diameter of the liquid injection hole 131 is defined as D1, a diameter of the central portion 13 is defined as D2, a capacity of the battery cell is defined as M, a fast charging capability of the battery cell is defined as N, and a current-carrying capability of the current collecting plate is defined as I, where 1/4πD2² - 1/4πD1² > MN/I, so as to prevent an excessively high temperature rise and ensure safety of the battery cell.

In some examples, the unit of the diameter D1 of the liquid injection hole 131 is mm, the unit of the diameter D2 of the central portion 13 is mm, the unit of the capacity M of the battery cell is Ah, the unit of the fast charging capability N of the battery cell is C, and the unit of the current-carrying capability I of the current collecting plate is A/mm.

Embodiments of the present application also disclose an electrical device, including the battery cell.

According to the electrical device in the embodiments of the present application, by setting the thickness of a part of the connecting portion 22 to be less than the thickness of other parts of the connecting portion 22, that is, reducing the thickness of the part of the connecting portion 22, the part of the connecting portion 22 after the thickness reduction is easier to bend, so that the foldable member 2 is easier to fold, the folding angle of the foldable member 2 is ensured, the unfolding effect of the current collecting plate is improved, the internal pressure and gas of the battery cell can be effectively released when thermal runaway occurs, and the safety of the electrical device is improved.

By setting the thickness of at least part of the connecting portion 22 to be less than the thickness of the current collecting plate body 1, that is, thinning the thickness of at least part of the connecting portion 22, the connecting portion 22 after thinning is easier to bend, which reduces the difficulty of folding the current collecting portion 21 relative to the connecting portion 22, thereby making the foldable member 2 easier to fold, ensuring the folding angle of the foldable member 2, improving the unfolding effect of the current collecting plate, making the internal pressure and gas of the battery cell effectively released when thermal runaway occurs, and improving the safety of the electrical device.

By setting the thickness of at least part of the connecting portion 22 to be less than the thickness of the current collecting portion 21, that is, thinning the thickness of at least part of the connecting portion 22, the connecting portion 22 after thinning is easier to bend, which reduces the difficulty of folding the current collecting portion 21 relative to the connecting portion 22, thereby making the foldable member 2 easier to fold, ensuring the folding angle of the foldable member 2, improving the unfolding effect of the current collecting plate, making the internal pressure and gas of the battery cell effectively released when thermal runaway occurs, and improving the safety of the electrical device.

It should be noted that the electrical device may be a vehicle, an energy storage power supply, a consumer electronic device, a medical device, a smart city, an aircraft, or a household appliance. It should be noted that the foregoing is merely examples of the electrical device, and does not impose a special limitation on the electrical device.

## Claims

1. A current collecting plate, comprising:
a current collecting plate body defined with a through hole; and
a foldable member disposed at the through hole, wherein the foldable member comprises a current collecting portion and a connecting portion, and the connecting portion connects the current collecting portion with the current collecting plate body;
wherein a thickness of a part of the connecting portion is less than a thickness of other parts of the connecting portion, and/or a thickness of at least part of the connecting portion is less than a thickness of the current collecting plate body, and/or a thickness of at least part of the connecting portion is less than a thickness of the current collecting portion.

2. The current collecting plate according to claim 1, wherein the connecting portion comprises a first metal connecting portion and a second metal connecting portion, the first metal connecting portion connects the second metal connecting portion with the current collecting plate body, the second metal connecting portion is connected to the current collecting portion, and a junction of the first metal connecting portion and the second metal connecting portion is located at a position of the connecting portion with a minimum thickness.

3. The current collecting plate according to claim 2, wherein the first metal connecting portion comprises a first secondary connecting portion and a second secondary connecting portion, the first secondary connecting portion connects the second secondary connecting portion with the current collecting plate body, and the second secondary connecting portion is connected to the second metal connecting portion; and
wherein a thickness of the second secondary connecting portion gradually decreases along a direction from the first secondary connecting portion to the second secondary connecting portion.

4. The current collecting plate according to claim 2, wherein the second metal connecting portion comprises a third secondary connecting portion and a fourth secondary connecting portion, the third secondary connecting portion connects the fourth secondary connecting portion with the current collecting portion, and the fourth secondary connecting portion is connected to the first metal connecting portion; and
wherein a thickness of the fourth secondary connecting portion gradually decreases along a direction from the third secondary connecting portion to the fourth secondary connecting portion.

5. The current collecting plate according to any one of claim 1 to claim 4, wherein a plurality of through holes and a plurality of foldable members are provided, and the plurality of through holes are in one-to-one correspondence with the plurality of foldable members.

6. The current collecting plate according to claim 5, wherein the current collecting plate body comprises an edge portion, a central portion, and a connecting member, the connecting member connects the edge portion with the central portion, and the plurality of foldable members are disposed around the central portion.

7. The current collecting plate according to claim 6, wherein the plurality of foldable members are all connected to the edge portion; and/or the plurality of foldable members are all connected to the central portion; and/or different ones of the foldable members are connected to different ones of the connecting members.

8. The current collecting plate according to claim 6, wherein a thickness of a part of the connecting member is less than a thickness of other parts of the connecting member.

9. The current collecting plate according to claim 8, wherein the connecting member comprises a first metal connecting segment and a second metal connecting segment, the first metal connecting segment connects the second metal connecting segment with the edge portion, the second metal connecting segment is connected to the central portion, and a junction of the first metal connecting segment and the second metal connecting segment is located at a position of the connecting member with a minimum thickness.

10. The current collecting plate according to claim 9, wherein the first metal connecting segment comprises a first secondary connecting segment and a second secondary connecting segment, the first secondary connecting segment connects the second secondary connecting segment with the edge portion, and the second secondary connecting segment is connected to the second metal connecting segment; and
wherein a thickness of the second secondary connecting segment gradually decreases along a direction from the first secondary connecting segment to the second secondary connecting segment.

11. The current collecting plate according to claim 9, wherein the second metal connecting segment comprises a third secondary connecting segment and a fourth secondary connecting segment, the third secondary connecting segment connects the fourth secondary connecting segment with the central portion, and the fourth secondary connecting segment is connected to the first metal connecting segment; and
wherein a thickness of the fourth secondary connecting segment gradually decreases along a direction from the third secondary connecting segment to the fourth secondary connecting segment.

12. The current collecting plate according to claim 9, wherein a plurality of connecting members are provided, and the plurality of connecting members are uniformly arranged around the central portion.

13. The current collecting plate according to claim 9, wherein a distance between an end portion at an end of the first metal connecting segment away from the junction and the junction is defined as L1, and a distance between an end portion at an end of the second metal connecting segment away from the junction and the junction is defined as L2;
wherein L1 is less than L2; or
a ratio of L1 to L2 ranges from 0.2 to 1.

14. The current collecting plate according to claim 9, wherein a maximum thickness of the connecting member ranges from 0.1 mm to 3 mm; and/or a ratio of a thickness of the junction to the maximum thickness of the connecting member is less than or equal to 0.7.

15. The current collecting plate according to claim 6, wherein the central portion protrudes from the foldable member.

16. The current collecting plate according to claim 9, wherein a first end of the second metal connecting segment is connected to the first metal connecting segment, a second end of the second metal connecting segment is connected to the central portion, and the second end of the second metal connecting segment protrudes in a direction away from the first metal connecting segment relative to the first end of the second metal connecting segment.

17. A battery cell, comprising a shell, a roll core, and the current collecting plate according to any one of claim 1 to claim 16, wherein the shell is formed with a mounting cavity, the roll core and the current collecting plate are both disposed in the mounting cavity, and the current collecting plate is connected to the roll core.

18. The battery cell according to claim 17, wherein the current collecting plate body comprises an edge portion, a central portion, and a connecting member, the connecting member connects the edge portion with the central portion, and the central portion is formed with a liquid injection hole.

19. The battery cell according to claim 18, wherein a ratio of an area of the liquid injection hole to a cross-sectional area of the roll core is less than 0.2.

20. The battery cell according to claim 19, wherein a diameter of the liquid injection hole is defined as D1, a diameter of the central portion is defined as D2, a capacity of the battery cell is defined as M, a fast charging capability of the battery cell is defined as N, and a current-carrying capability of the current collecting plate is defined as I, wherein 1/4πD2² - 1/4πD1² > MN/I.

21. An electrical device, comprising the battery cell according to any one of claim 17 to claim 20.
